# EUROPEAN PATENT APPLICATION

(11) **EP 1 372 016 A2**
(43) Date of publication of application: **17.12.2003**
(21) Application number: 03253718.5
(22) Date of filing: 12.06.2003
(51) Int. Cl.: G02B 27/09, G02B 5/32, B23K 26/06, B41M 5/24

(54) **Dynamic shaping of laser beams**

(30) Priority: 15.06.2002 GB 0213809
(71) Applicant: Brocklehurst John Robert, Baldock SG7 5RS (GB); Laser Optical Engineering Limited, Loughborough LE11 3XZ (GB)
(72) Inventor: Tyrer, John Raymond, Rearsby, Leics LE7 4FY (GB); Noden, Sara, Findern, Derbys DE65 6AH (GB)

(57) **Abstract**

In laser light beam (1) shaping, a reflective Spatial Light Modulator (3) is used as a kinoform. The configuration of the SLM can be modified, thus the hologram or phase hologram can be altered for different etching jobs. The SLM is typically a Liquid Crystal on Silicon microdisplay (LCOS), which reflects, rather than transmitting, the incident laser light. The modulated light is then used to modify a surface (4).

## Description

This invention is directed to the shaping of laser beams, and in particular aspects, to the shaping of laser beams using liquid crystal modulators.

It is known that laser beams may be shaped with holograms known as kinoforms (US patents 3606515 & 4602843, EP 0077464 A2). The University of Loughborough has further developed the kinoform concept such that the properties of a material being marked or otherwise modified by the laser beam can be built into the kinoform to ensure very accurate control of the interaction between the laser beam and the material (UK LINK Surface Engineering Project- "Kinoform Optics for Laser Materials Processing" http://www.cmf.fl.ac.uk/kinoform/index.htm).

Existing techniques for manufacturing kinoforms involve etching the phase pattern into a solid surface such as silicon, and coating it with a suitable reflective material such as gold. Whilst this works very well if the same beam profile is needed constantly, it is of no use if the profile needs to be changed frequently.

The use of cheap laser diodes for materials processing and marking/printing is limited by the fact that by and large their beam profiles are completely inappropriate. The beam profile of most high power laser diodes is rectangular with a high aspect ratio because the laser is built up from many (e.g. 40) individual laser diode chips bonded together to form a bar. This presents serious problems in most applications that require a circular Gaussian beam.

The present invention aims to address these problems and provide an improved technique for changing the beam profile.

Accordingly, the invention consists in one aspect in apparatus for shaping a laser light beam, comprising a reflective spatial light modulating means.

In another aspect, the invention provides apparatus for modifying a surface with laser light beam, comprising a laser light source, optical means for directing laser light from the source, and reflective spatial light modulating means for shaping laser light received from the optical means and directing the modulated laser light onto the surface.

A Liquid Crystal Spatial Light Modulator (SLM), when configured to modulate the amplitude of light falling on it, acts as the display with which we are all familiar on calculators, lap top computers, and increasingly on desk top computers. However, many SLMs can also be configured to modulate the phase of the light falling on them. Thus, such an SLM can be used to modulate laser light, and hence provide a dynamic modulator, as it is operable between different modulation configurations.

In an embodiment of the invention, a small, reflective Liquid Crystal on Silicon (LCOS) SLM is used. Attempts to use the readily available transmissive SLMs (displays) as phase modulators to generate kinoforms may fail because the low pixel fill factor may give rise to significant diffraction patterns from the regular pattern of pixels. This may cause significant light loss from the required effect, and may cause collateral damage either to the system or the target. The advent of small, reflective high fill factor, Liquid Crystal on Silicon (LCOS) microdisplays offers the opportunity to generate kinoforms that will not have the diffraction artefacts of the earlier transmissive devices.

Use of an LCOS SLMs allows a high fill factor (ratio of active area to total area), as the incident light is reflected, allowing the driving elements to be disposed behind the liquid crystal layer, rather than occupying a corner of each pixel, as is the case in active-matrix type SLMs. This also minimises the effects of the pixel array acting as a diffraction grating which diverts light from its intended location. The fill factor is preferably at least 90% and more preferably 95%.

In a further embodiment, LCOS devices that are capable of displaying multiple phase levels (preferably greater than 16) are used. Thus any device which operates by modifying the refractive index of the liquid crystal layer can potentially be used. By way of an example, the use of the Three-Five Systems Brillian 1280 device is described here.

In a further aspect, the invention consists in a method of modifying a surface with a laser light beam, comprising the steps of receiving a laser light from a laser light source and employing a reflective spatial light modulating means to modulate the laser light and direct the modulated laser light onto the surface.

In a still further aspect, the invention provides an optical device for directing laser light from a laser light source onto a modulating device, comprising a first lens and a second lens, the first lens comprising a plurality of cylindrical lenses for controlling divergence of the laser light within a first plane normal to the plane of the first lens, the second lens controlling divergence of the laser light within a second plane orthogonal to the first plane.

The invention will now be described by way of example, with reference to the accompanying drawings, in which:
Figure 1 is a diagram illustrating the general optical set up used for shaping the laser beam, and thus modify the surface/make a mark;
Figure 2 shows a typical kinoform;
Figure 3 shows the light pattern generated when the kinoform in Figure 2 is displayed on a Three-Five Systems Brillian 1280 device and illuminated with a low cost red laser pointer; and
Figure 4 is a diagram illustrating the optical train used with a laser diode array in an embodiment of the invention.

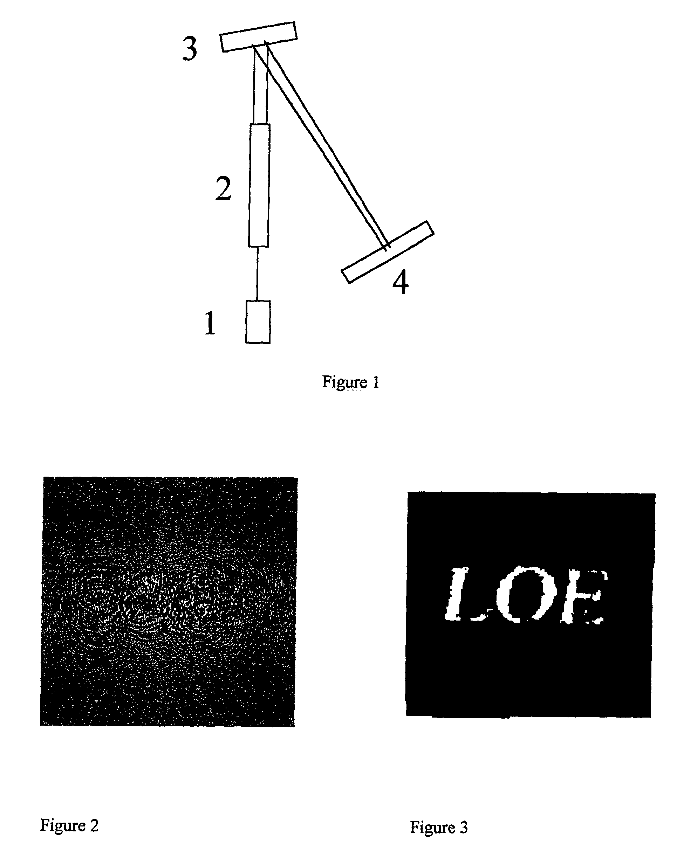

The optical set up of Figure 1 consists of a laser source (1). This can be any type of laser, but for preference is a low cost laser diode. The wavelength of operation will depend on the application, but is preferably within the transmission window of the liquid crystal SLM (typically 400 - 2000 nm). The beam from the laser is first conditioned by the optical train (2) to provide a collimated beam at the SLM. This conditioning will include expansion of the beam to fill the area of the SLM, and shaping of the beam so that its shape exactly matches that of the active area of the SLM to maximise useful light throughput. The use of a laser diode bar with a rectangular beam profile is a significant advantage in this invention since the SLM is typically rectangular. Further corrections to the laser diode beam (e.g. non-uniformity due to the anisotropic divergence of the beam) may be corrected in the design of the kinoform.

The conditioned collimated beam impinges on the SLM (3) at very close to normal incidence. This ensures the maximum effect of the liquid crystal layer on the beam. The kinoform (which is a phase hologram so does not require the use of the polarisers normally found with liquid crystal devices) is displayed on the SLM. When the beam leaves the SLM it has acquired the phase information needed to generate the necessary light pattern at the target. At the target (4), the light pattern is generated, and the surface of the material is suitably modified. The distance between the SLM and the target is typically wavelength dependent, but the design of the kinoform need not be, and is typically wavelength independent.

Clearly the choice of operating wavelength will be governed by a variety of issues such as the type of effect required at the target, the time available for achieving that effect, the availability of suitable (low cost) laser sources etc.

Clearly the optical train required will vary with the type of laser source being used. For all sources the plane of polarisation of the laser is preferably aligned with the principal polarisation direction of the SLM. If a fibre laser source is used, this typically necessitates that it is constructed with polarisation maintaining fibre. With both conventional lasers (e.g. Nd-YAG) and fibre lasers the narrow circular beam must be expanded to fill the SLM aperture. The techniques for doing this are well known to those skilled in the art, but use of a fixed holographic element to convert from an expanded circular beam to a rectangular one could be advantageous from an efficiency point of view.

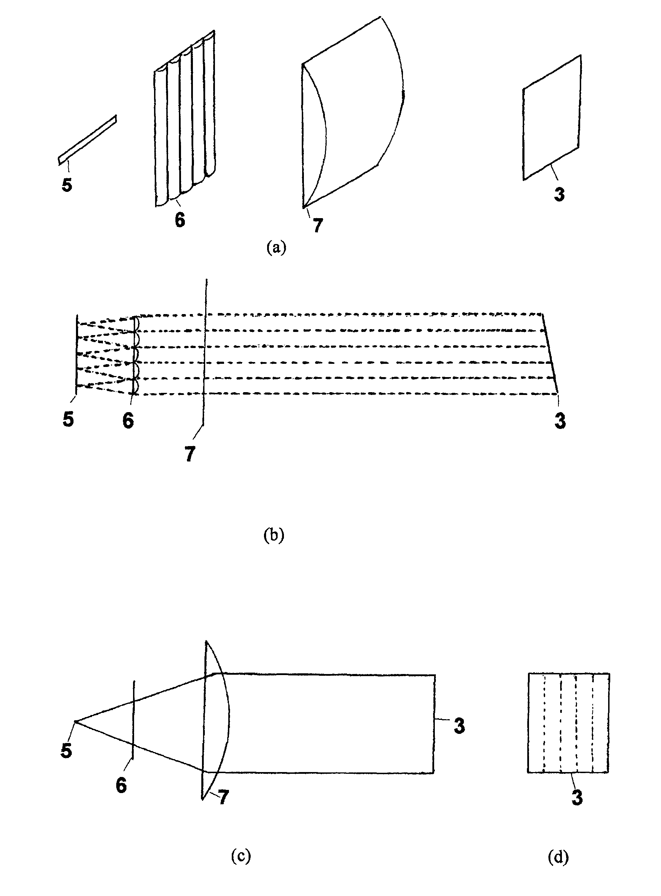

When using a laser diode array, the challenge is how to correct for the fact that the output beam is diverging in two orthogonal directions at different rates. Figure 4 shows a means of achieving this. By way of example, and for clarity in the drawing, a limited number of elements is shown. Clearly any number of diodes could be used in the array, and typically this number is at least 40. Light from an array of laser diodes (5) is first collimated in one direction by an array of cylindrical microlenses (6) with one lens collimating the light from one diode. A bulk cylindrical lens (7) then collimates the light in the orthogonal direction from all the diodes (as they lie along the line of focus of this lens) so that the SLM (3) is illuminated by a series of parallel stripes each originating from one diode. Clearly the positions of microlens array (6) and bulk cylindrical lens (7) could be interchanged and the same effect obtained. Figure 4(a) shows the general layout of the components. Figure 4(b) shows how the microlens array (6) achieves collimation in one direction whilst figure 4(c) shows the bulk cylindrical lens (7) achieving collimation in the orthogonal direction. Figure 4(d) shows the way the SLM (3) is illuminated in parallel collimated stripes. Any problems caused by lack of coherence between adjacent diodes is eliminated since each illuminates a separate strip of the SLM. However, each illuminated strip produces the correct replay image in the replay plane.

In a further embodiment, the SLM is capable of displaying a range of phase retardations from 0 to 2π. For preference there should be a minimum of 16 steps across the range. This is provided for three reasons:
1) to ensure that the kinoform is as efficient as possible (i.e. as much as possible of the incident light is diffracted to its intended location)
2) to enable the designer of the kinoform to take into account known variations in intensity across the incoming laser beam
3) to enable the designer of the kinoform to take into account the properties of the material on which the modified laser beam is expected to impinge.

In another embodiment, the kinoform includes a lens function, so that the required pattern of light is focussed at a specified plane in space. This enables some latitude to be gained in the positioning of the surface on which the pattern impinges (i.e. a depth of focus can be imparted on the system). This is particularly important in laser marking applications where competing technologies such as ink jet require a very precise location of the surface being marked. A general advantage of having a focussing mechanism is that any diffraction pattern generated by the pixel array of the SLM is spread out so as not to interfere with the required light distribution.

This technique may be used in a wide variety of applications, including, but not limited to:
1) high speed laser marking - present techniques are limited to dot matrix characters ( or slow scanning of the laser beam to form more complex shapes). The invention will allow complex marks to be made in one hit.
2) soldering of heat sensitive components onto printed circuit boards (the heat is only applied to the contact areas which need to be soldered).
3) Cutting of precision holes e.g. in a stainless steel screen for screen printing solder paste onto printed circuit boards.
4) Welding of plastics (current laser welding techniques are too expensive; this invention will allow the use of low cost laser diodes).

It will be appreciated by those skilled in the art that the invention has been described by way of example only, and that a variety of alternative approaches may be adopted without departing from the scope of the invention.

## Claims

1. Apparatus for shaping a laser light beam, comprising a reflective spatial light modulating means.

2. Apparatus for modifying a surface with a laser light beam, comprising a laser light source, optical means for directing laser light from the source, and reflective spatial light modulating means for modulating laser light received from the optical means and directing the modulated laser light onto the surface.

3. Apparatus according to Claim 1 or Claim 2, wherein the modulating means is operable between a first and other light modulating configurations.

4. Apparatus according to any of the above claims, wherein the modulating means is a liquid crystal SLM device.

5. Apparatus according to any of the above claims, wherein the modulating means is an LCOS SLM.

6. Apparatus according to any of the above claims, wherein the modulating means modulates the phase of incident laser light.

7. Apparatus according to Claim 6, wherein the modulating means is capable of displaying a plurality of phase levels.

8. Apparatus according to any of the above claims, wherein the modulating means is adapted to focus the laser light beam.

9. Apparatus according to Claim 8, wherein the modulating means is adapted to focus the laser light beam onto a particular spatial plane.

10. Apparatus according to any of the above claims, wherein the configuration of the modulating means is variable in dependence upon properties of a surface to be illuminated.

11. A method of modifying a surface with a laser light beam, comprising the steps of receiving a laser light from a laser light source and employing a reflective spatial light modulating means to modulate the laser light and direct the modulated laser light onto the surface.

12. A method according to Claim 11, comprising receiving laser light from the laser light source and employing optical means to direct the laser light onto the spatial light modulating means.

13. A method according to Claim 11 or Claim 12, comprising operating the modulating means between a first and other light modulating configurations.

14. A method according to any of the Claims 11 to 13, wherein the modulating means is a liquid crystal SLM device.

15. A method according to any of the Claims 11 to 14, wherein the modulating means is an LCOS SLM.

16. A method according to any of the Claims 11 to 15, comprising employing the modulating means to modulate the phase of incident laser light.

17. A method according to Claim 16, comprising displaying a plurality of phase levels on the modulating means.

18. A method according to any of the Claims 11 to 17, comprising employing the modulating means to focus the laser light.

19. A method according to Claim 18, comprising focusing the laser light onto a particular spatial plane.

20. A method according to any of the Claims 11 to 19, comprising varying the configuration of the modulating means in dependence upon properties of the surface.

21. An optical device for directing laser light from a laser light source onto a modulating device, comprising a first lens and a second lens, the first lens comprising a plurality of cylindrical lenses for controlling divergence of the laser light within a first plane normal to the plane of the first lens, the second lens controlling divergence of the laser light within a second plane orthogonal to the first plane.

22. Apparatus according to any of the Claims 1 to 10, comprising an optical device according to Claim 21.

23. A method according to any of the Claims 11 to 20, comprising employing an optical device according to Claim 21.
